(19) Europäisches Patentamt / European Patent Office / Office européen des brevets

(11) **EP 4 242 969 A1**

(12) **EUROPEAN PATENT APPLICATION**

(43) Date of publication:
**13.09.2023 Bulletin 2023/37**

(21) Application number: **22305272.1**

(22) Date of filing: **10.03.2022**

(51) International Patent Classification (IPC):
*G06T 9/00* (2006.01)      *G06T 9/40* (2006.01)
*H04N 19/13* (2014.01)      *H04N 19/91* (2014.01)
*H04N 19/96* (2014.01)

(52) Cooperative Patent Classification (CPC):
**H04N 19/13; G06T 9/001; G06T 9/40; H04N 19/91**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100000 (CN)**

(72) Inventors:
• **LASSERRE, Sebastien**
  **35235 Thorigne-Fouillard (FR)**
• **TAQUET, Jonathan**
  **35160 Talensac (FR)**

(74) Representative: **RVDB Rennes**
**44 rue Lariboisière**
**35235 Thorigné-Fouillard (FR)**

(54) **ENCODING/DECODING OCCUPANCY INFORMATION OF A CURRENT NODE OF A TREE REPRESENTING POINT CLOUD GEOMETRY DATA**

(57)   There is provided methods and apparatus of encoding/decoding occupancy information of a current node of a tree representing point cloud geometry data, said occupancy information associated with the current node comprising an occupancy bit ($b_0$, $b_7$) per child node of the current node to indicate whether the child node is occupied when at least one point of the point cloud is associated with it or unoccupied otherwise, wherein encoding/decoding (110,210) a first occupancy bit (bo), associated with a first child node of the current node comprises:
- determining (111,211) a series of at least one bit ($\beta_1$,..., $\beta_K$) comprising at least one bit representative of occupancy information of a set of neighboring nodes relative to the first child node; and
- entropy encoding (112,212), into the bitstream, the first occupancy bit (bo) based on the series of at least one bit ($\beta_1$, ..., $\beta_K$).

100

**Fig. 8**

Processed by Luminess, 75001 PARIS (FR)

EP 4 242 969 A1

**Description**

FIELD

The present application generally relates to numerical data compression and, in particular to methods and apparatus of encoding/decoding occupancy information of a current node of a tree representing point cloud geometry data.

BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

As a format for the representation of 3D data, point clouds have recently gained traction as they are versatile in their capability in representing all types of physical objects or scenes. Point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such point clouds are typically static, colored and huge.

Another use case is in topography and cartography in which using 3D representations allow for maps that are not limited to the plane and may include the relief. Google Maps is now a good example of 3D maps but uses meshes instead of point clouds. Nevertheless, point clouds may be a suitable data format for 3D maps and such point clouds are typically static, colored and huge.

Virtual Reality (VR), Augmented Reality (AR) and immersive worlds have recently become a hot topic and are foreseen by many as the future of 2D flat video. The basic idea is to immerse the viewer in a surrounding environment, in contrast to a standard TV that only allows the viewer to look at the virtual world in front of him/her. There are several gradations in the immersivity depending on the freedom of the viewer in the environment. A point cloud is a good format candidate for distributing VR/AR worlds.

The automotive industry, and more particularly foreseen autonomous cars, are also domains in which point clouds may be intensively used. Autonomous cars should be able to "probe" their environment to make good driving decisions based on the detected presence and nature of their immediate nearby objects and road configuration.

A point cloud is a set of points located in a three-dimensional (3D) space, optionally with additional values attached to each of the points. These additional values are usually called attributes. Attributes may be, for example, three-component colors, material properties like reflectance and/or two-component normal vectors to a surface associated with a point.

A point cloud is thus a combination of geometry data (locations of the points in a 3D space usually represented by 3D cartesian coordinates x, y and z) and attributes.

Point clouds may be sensed by various types of devices like an array of cameras, depth sensors, lasers (light detection and ranging, also known as Lidars), radars, or may be computer-generated (for example in movie post-production). Depending on the use cases, points clouds may have from thousands to up to billions of points for cartography applications. Raw representations of point clouds require a very high number of bits per point, with at least a dozen of bits per cartesian coordinate x, y or z, and optionally more bits for the attribute(s), for instance three times 10 bits for the colors.

It is important in many applications to be able to either distribute point clouds to an end-user or store them in a server by consuming only a reasonable amount of bitrate or storage space, while maintaining an acceptable (or preferably very good) quality of experience. Efficient compression of these point clouds is a key point in order to make the distribution chain of many immersive worlds practical.

Compression may be lossy (like in video compression) for the distribution to and visualization by an end-user, for example on AR/VR glasses or any other 3D-capable device. Other use cases do require lossless compression, like medical applications or autonomous driving, to avoid altering the results of a decision obtained from the subsequent analysis of the compressed and transmitted point cloud.

Until recently, point cloud compression (aka PCC) was not addressed by the mass market and no standardized point cloud codec was available. In 2017, the standardization working group ISO/JCT1/SC29/WG11, aka Moving Picture Experts Group or MPEG, has initiated work items on point cloud compression. This has led to two standards, namely

- MPEG-I part 5 (ISO/IEC 23090-5) or Video-based Point Cloud Compression (aka V-PCC)

- MPEG-I part 9 (ISO/IEC 23090-9) or Geometry-based Point Cloud Compression (aka G-PCC)

Point cloud geometry data may be represented by geometrical elements defined in a three-dimensional space.

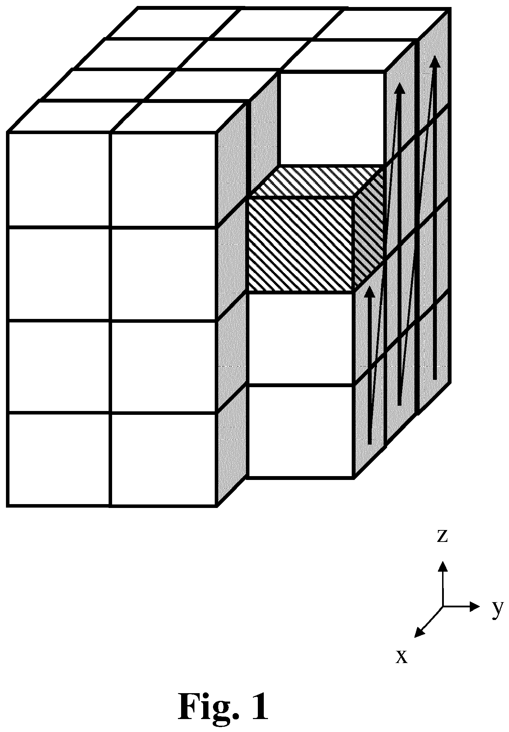

For example, point cloud geometry data may be represented by a voxel representation as depicted on **Figure 1.** A voxel representation splits a bounding box surrounding a point cloud into three-dimensional geometrical elements denoted voxels. The voxel representation may be scanned in a raster scan order.

On **Figure 1,** the order shown follows a raster scan firstly in y, secondly in x and finally in z. Point cloud geometry data may be entirely represented in a voxel representation and each occupied voxel, i.e. voxels comprising each at least a point of the point cloud, may be accessed from the raster scan order in xyz (or yxz or any axis order) for example. A binary data fj is usually associated with each voxel **j** to indicate that at least one point of the point cloud is comprised in the voxel. This binary data is commonly called occupancy data, occupancy flag or occupancy bit. For example, an occupancy bit fj equals to 0 indicates that a voxel **j** is unoccupied (does not comprise at least one point of the point cloud) and an occupancy bit fj equals to 1 indicates that at least one point is comprised in the voxel **j.**

In G-PCC, an octree representation is used for representing point cloud geometry data. The geometrical elements are nodes of said octree, each node being associated with a cube (or more generally a "shoebox-shaped" cuboid) comprising at least one point of the point cloud. A root cube is associated with the root node of the octree. This root cube is split into eight equal child cubes associated with the eight child nodes of the root node. The child cubes are scanned in a pre-determined scan order. Each child node is marked occupied or unoccupied depending upon the presence or not of at least one point of the point cloud in cube associated with a child node. The split is applied recursively to child-nodes, grand-child-nodes, etc., until a predetermined maximum depth is reached. In G-PCC, the scanning is performed in a breadth-first order, i.e. all nodes of a given depth are processed before those of the next depth. The point cloud is coded as a set of points located in occupied leaf nodes having maximum depth, for instance at the centre of such nodes. Consequently, the set of points of the point cloud is entirely determined by the root cube, the predetermined scan order of child nodes, the maximum depth and an 8-bit occupancy pattern associated with each occupied internal node named occupancy information. The 8-bit occupancy pattern comprises 8 occupancy bits bj (j=0,...,7) each associated with a child node **j,** the occupancy bit bj represents the occupancy data of the associated child node **j.**

Encoding/decoding point cloud geometry data comprises entropy encoding/decoding the occupancy information associated with nodes of an octree (with voxels in a voxel representation), i.e. encoding/decoding a series of occupancy bits bj (8 for an octree representation) representative of an occupancy information associated with each internal node (each voxel). Encoding/decoding an occupancy bit bj of a series of occupancy bits requires that a binary entropy coder/decoder associated with the occupancy bit bj be selected among a set of binary entropy coders. A binary entropy coder/decoder requires an internal probability that is determined from relevant available (i.e. already coded) information and correlation to obtain a high coding efficiency. The binary entropy coders/decoders are usually selected based on neighborhood occupancy configurations (contexts) each entropy coder/decoder being associated with a particular internal probability determined based on a particular neighborhood occupancy configuration associated with a current node/voxel to be encoded/decoded.

In the following, the term node may also indicate a cube or a cuboid associated with it or a voxel.

A neighborhood occupancy configuration is a series of K occupancy bits associated with nodes belonging to a causal neighborhood relative to a current node for which an occupancy bit bj is to be entropy encoded/decoded.

**Figure 1** shows schematically a neighboring causality of already coded/decoded nodes (white cubes) toward a current node (hashed cube) to be coded/decoded. Already coded/decoded neighboring nodes are those whose raster scan order is lower than the order of the current node.

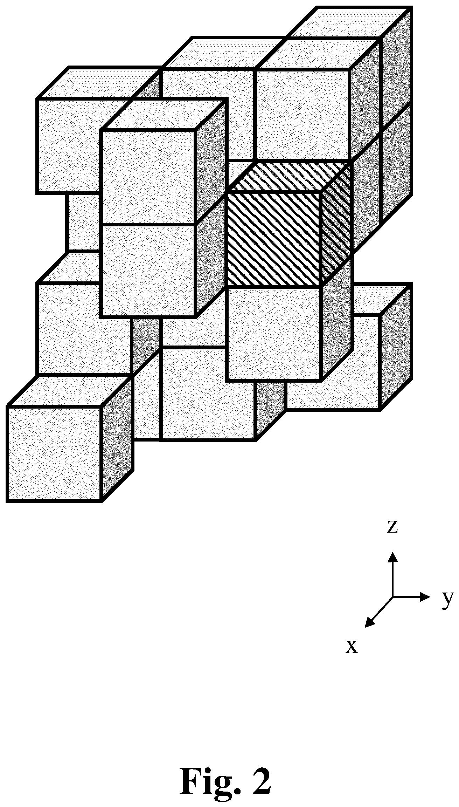

**Figure 2** shows schematically an example of a neighborhood occupancy configuration, i.e. an example of a causal neighborhood of a current node for which only occupied nodes are drawn. The number of possible neighborhood occupancy configurations is $2^N$ where N is the number of nodes involved in the causal neighborhood.

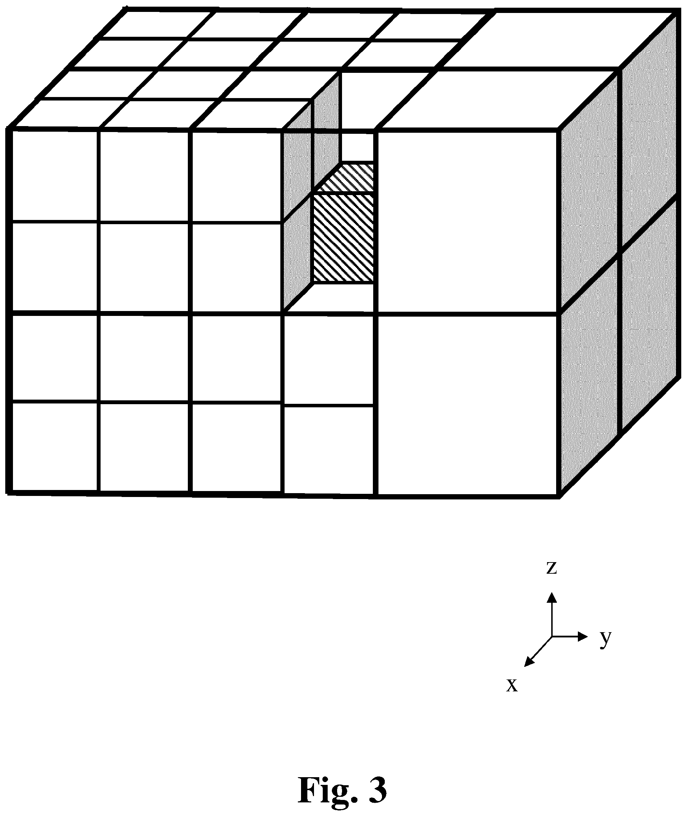

In an octree representation of the point cloud, if nodes are processed in a breadth-first order as in G-PCC, one may profit from the knowledge of the occupancy of nodes at lower depth as depicted on **Figure 3.**

Nodes at depth lower than the current node may be used to obtain geometry information in regions (here for y higher than the y of the current node) not yet coded at current depth.

In G-PCC, a combination of neighboring nodes at current depth and current depth minus one is used to define a neighborhood. However, in order to limit the number of possible neighborhood occupancy configurations, the neighborhood has been limited to a subset of the set of nodes adjacent (defined as "sharing a face with") to the current node.

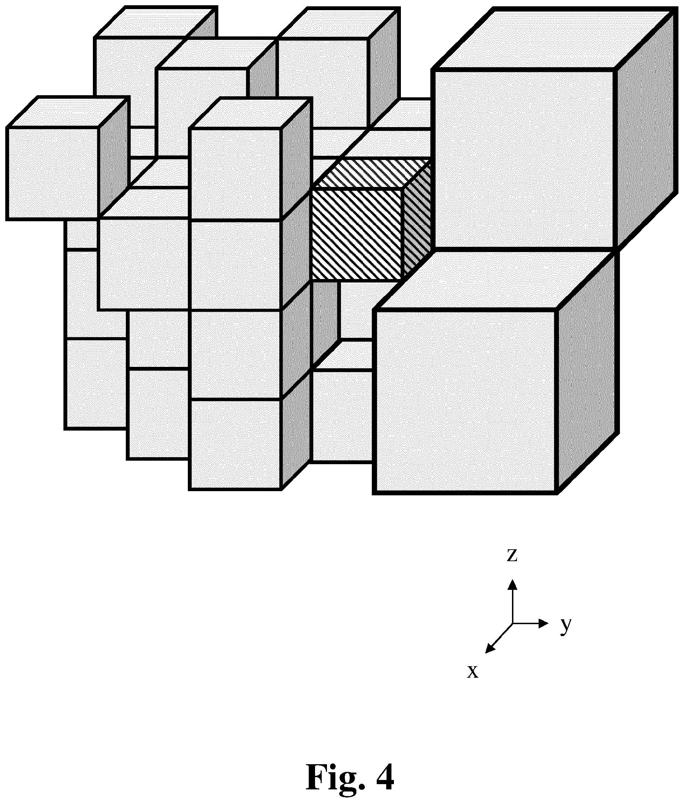

**Figure 4** shows schematically an example of a neighborhood occupancy configuration when neighboring nodes of depth lower than the current depth are also involved.

A drawback of prior arts for entropy encoding/decoding a series of occupancy bits is their inability to use a big causal neighborhood, big enough to include most of (or all) local correlations, to code the occupancy information of a node in the octree representation.

In practice, using a big causal neighborhood involves a too high number of possible neighborhood occupancy configurations to be used directly in selecting an entropy coder/decoder.

Several techniques have been proposed to reduce the number of possible neighborhood occupancy configurations.

In a first reduction approach, some "physical" arguments have been introduced like the masking of an occupied neighbor by another occupied neighbor placed between a former and a current node; in this case the information of the former is discarded because this information is supposed to be weaker than the information of the latter.

In a second reduction approach, based on learning, local reductions, implemented using Look-Up-Tables (LUT) of limited size, have been proposed but the building of the local reduction depends much on the type of learned point clouds.

In a third reduction approach, a more flexible technique named OBUF (Optimal Binary Coder with Update on the Fly) has been introduced to reduce the number of entropy coders/decoders by using a limited number of adaptive entropy coders/decoders (say 32). An entropy coder/decoder index (say 0 to 31) is associated with each neighborhood occupancy configuration, and, after each encoding/decoding of an occupancy bit of a current node, the entropy coder/decoder index associated with the neighborhood occupancy configuration of the current node is updated. More details of OBUF can be found in the ACM paper entitled "Using neighboring nodes for the compression of octrees representing the geometry of point clouds" (S. Lasserre et al., ACM MMSys'19, June 2019, Amherst, Massachusetts, USA).

OBUF has been combined with the first reduction approach, applied before OBUF, to limit the number of entropy coder/decoder indices that are dependent on reduced neighborhood occupancy configurations.

OBUF combined with the first reduction approach as currently used in GPCC is very efficient once a sufficiently high number of occupancy bits have been encoded/decoded such that the LUT has been updated enough times to converge and to point consistently to entropy coders/decoders having coding probability well correlated with the reduced neighborhood occupancy configurations.

However, when points clouds are small or at the start of the coding/decoding process of big point clouds, the OBUF LUT has not converged yet and cannot select an adequate entropy coder/decoder. This leads to bad compression of small point clouds or to degraded compression of big point clouds.

In a 3D octree representation of the geometry of the point cloud, the number of possible neighborhood occupancy configurations of a neighborhood is $2^N$ where N is the number of nodes involved in the neighborhood. This number becomes very large even when a low number N of neighbors is involved.

Therefore, in the European patent application n° EP21306741.6, filed on December 10th, 2021, a dynamic reduction function DR is introduced to reduce the dynamic of neighborhood occupancy configurations. Basically, the dynamic reduction function DR is initialized with an initial dynamic reduction function DR° with maximum reduction of dynamic of all neighborhood occupancy configurations, and is then updated successively into $DR^1$, $DR^2$, ..., $DR^n$, etc. Each update depends on the visited neighborhood occupancy configurations during coding/decoding and is determined by relaxing the reduction on often visited neighborhood occupancy configurations. One obtains a tower of dynamic reduction functions $DR^n$ with increasing image size which is equal to the number of possible output dynamically reduced neighborhood occupancy configurations.

$$\#Im\ DR^0 \leq \#Im\ DR^1 \leq \ldots \leq \#Im\ DR^n \leq \#Im\ DR^{n+1} \leq \ldots$$

A typical example of a number of neighborhood occupancy configurations involved in the encoding/decoding of occupancy information of an octree representing point cloud geometry data is as follows. There are 26 neighboring nodes sharing a face, an edge or a vertex with the parent of the current node whose occupancy bit is to be coded. When using a breadth-first scanning of the octree, all occupancy bits of these 26 neighboring nodes are already encoded/decoded and can be used to build neighboring occupancy configurations. Depending on the scanning order (Morton order or raster scan order), most of the time at least 7 of the 26 neighboring nodes have already had their children's occupancy bits being encoded/decoded. This adds 8*7= 56 occupancy bits that can be used to build neighboring occupancy configurations for encoding/decoding the occupancy bit of the current node. Finally, part of sibling nodes of the current node may have already been coded. They are at most 7. So, all in all, up to 26 + 56 + 7 = 89 already-coded occupancy bits may be used as contextual information for coding a current node, just by considering closest neighboring nodes touching the current node. This leads to $2^{89} \approx 1000^9 = 10^{27}$ possible neighborhood occupancy configurations used as contextual information.

Not all these neighborhood occupancy configurations are visited when encoding/decoding occupancy information of nodes of an octree representing point cloud geometry data. However, they must be kept covering a wide variety of point clouds. For example, encoding/decoding occupancy information of an AR/VR dense point cloud would lead to visit some particular neighborhood occupancy configurations but encoding/decoding occupancy information of a Lidar sparse point cloud would lead to visit other neighborhood occupancy configurations. The primary goal of the dynamic reduction function is to further dynamic reduce neighborhood occupancy configurations that are rarely or never visited and give full potential (i.e. no or weak dynamic reduction) to neighborhood occupancy configurations that are visited often. The dynamicity comes from the on-the-fly determination of the often-visited neighborhood occupancy configurations during encoding/decoding and from the update of the dynamic reduction function based on this determination.

In the European patent application n° EP21306741.6, the dynamic reduction function DR is built by keeping a given number of bits of each neighborhood occupancy configuration. Let us suppose that a neighborhood occupancy configuration NC is a word made of a series of K (ordered) bits from a highest bit $\beta_1$ to a lowest bit $\beta_K$:

$$NC = \beta_1, \ldots, \beta_K$$

As an example, a dynamic reduction function $DR^n$ may simply be defined by keeping the first $k_n(NC)$ bits of NC such that the dynamically reduced neighborhood occupancy configuration NC' is given by:

$$NC' = \beta_1, \ldots, \beta_{k_n(NC)}$$

where the dynamic reduction function $DR^n$ is entirely defined by an array of integer values $k_n(NC)$. The initial integer value of $k_0(NC)$ may be initialized to zero:

$$k_0(NC) = 0$$

The update from $DR^n$ to $DR^{n+1}$ is performed by changing the array $k_n(NC)$ into a new array $k_{n+1}(NC)$. This change is made by increasing the number of kept bits.

$$k_n(NC) \leq k_{n+1}(NC)$$

Combining OBUF together with a dynamic reduction as described in the European patent application n° EP21306741.6, named dynamic OBUF, leads to handle up to millions of neighborhood occupancy configurations. This limitation comes from the memory footprint of the underlying growing tree used to build the dynamic reduction function that requires basically two bytes (one for $k_n$ and one for a encoder/decoder index) per leaf node corresponding each to a reduced neighborhood occupancy configuration. Ideally, the tree should remain in the cache memory of a CPU and typical cache memory size is several megabytes.

The problem is to reduce the memory footprint of neighborhood occupancy configurations provided as entry to dynamic OBUF.

At least one exemplary embodiment of the present application has been devised with the foregoing in mind.

SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of encoding, into a bitstream, occupancy information of a current node of a tree representing point cloud geometry data, said occupancy information associated with the current node comprising an occupancy bit per child node of the current node to indicate whether the child node is occupied when at least one point of the point cloud is associated with it or unoccupied otherwise, wherein encoding a first occupancy bit, associated with a first child node of the current node, comprises determining a series of at least one bit comprising at least one bit representative of occupancy information of a set of neighboring nodes relative to the first child node; and entropy encoding, into the bitstream, the first occupancy bit based on the series of at least one bit.

According to a second aspect of the present application, there is provided a method of decoding, from a bitstream, occupancy information of a current node of a tree representing point cloud geometry data, said occupancy information associated with the current node comprising an occupancy bit per child node of the current node to indicate whether the child node is occupied when at least one point of the point cloud is associated with it or unoccupied otherwise, wherein decoding a first occupancy bit, associated with a first child node of the current node, comprises decoding, from the bitstream, a series of at least one bit comprising at least one bit representative of occupancy information of a set of neighboring nodes relative to the first child node; and entropy decoding the first occupancy bit based on the series of at least one bit.

In one exemplary embodiment, the set of neighboring nodes comprises multiple sub-sets of neighboring nodes and wherein the series of at least one bit comprises one bit, named first bit, indicating whether more than one sub-set, named occupied sub-set, comprises at least one occupied neighboring node.

In one exemplary embodiment, when the first bit indicates that more than one sub-set is occupied, the series of at least one bit further comprises at least one other bit indicating which sub-sets are occupied.

In one exemplary embodiment, the series of at least one bit further comprises at least one bit per occupied sub-set to indicate which neighboring node of said occupied sub-set is occupied.

In one exemplary embodiment, when the first bit indicates that at most one sub-set is occupied, the series of at least one bit further comprises at least one bit representative of occupancy information of at least one farther neighboring node different from the neighboring nodes of the set of neighboring nodes.

In one exemplary embodiment, encoding, into the bitstream, occupancy bit associated with each other child node, named a current child node, of the current node, comprises determining a second series of at least one bit comprising the first occupancy bit and one other bit, named first bit, representative of occupancy information of a second set of neighboring nodes of the current child node; and entropy encoding, into the bitstream, said other occupancy bit based on the second series of at least one bit.

In one exemplary embodiment, decoding, from the bitstream, occupancy bit associated with each other child node, named a current child node, of the current node, comprises decoding, from the bitstream, a second series of at least one bit comprising to the first occupancy bit and one other bit, named first bit, representative of occupancy information of a second set of neighboring nodes of the current child node; and entropy encoding said other occupancy bit based on the second series of at least one bit.

In one exemplary embodiment, the second set of neighbouring nodes comprises multiple sub-sets of neighbouring nodes of the current child node, and wherein the first bit indicates whether at least one of the sub-sets, named occupied sub-set, comprises at least one occupied neighboring node.

In one exemplary embodiment, when the first bit indicates that each sub-set is occupied, the second series of at least one bit further comprises at least one third bit per occupied sub-set to indicate which neighboring node of said sub-set is occupied and at least one other bit representative of occupancy of at least one neighboring parent node of the current child node.

In one exemplary embodiment, when the first bit indicates that all the sub-sets are unoccupied, the second series of at least one bit may further comprise at least one other bit representative of occupancy of at least one farther neighboring of the current child node.

According to a third aspect of the present application, there is provided an apparatus comprising one or more processors configured to carry out a method according to the first or second aspect of the present application.

According to a forth aspect of the present application, there is provided a computer program product including instructions which, when the program is executed by one or more processors, causes the one or more processors to carry out a method according to the first or second aspect of the present application.

According to a fifth aspect of the present application, there is provided a non-transitory storage medium carrying instructions of program code for executing a method according to the first or second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows schematically an example of a voxel representation in accordance with prior art;

**Figure 2** shows schematically an example of a neighborhood configuration in accordance with prior art;

**Figure 3** shows schematically an example of the occupancy information of nodes at lower depth in accordance with prior art;

**Figure 4** shows schematically an example of a neighborhood occupancy configuration when neighboring nodes of depth lower than the current depth are also involved in accordance with prior art;

**Figure 5** shows a simple example of illustrating the reduction of a representation of neighborhood occupancy configurations according to at least one embodiment;

**Figure 6** shown a Morton scanning order within a node of an octree;

**Figure 7** shown examples of available neighboring nodes when using a Morton scanning order in an octree;

**Figure 8** shows a schematic block diagram of steps of a method 100 of encoding, into a bitstream, occupancy information of a current node of a tree representing point cloud geometry data in accordance with at least one exemplary embodiment;

**Figure 9** shows a schematic block diagram of steps of a method 200 of decoding, from a bitstream, occupancy information of a current node of a tree representing point cloud geometry data in accordance with at least one exemplary embodiment;

**Figure 10** shows an example of a set of neighboring nodes split into three sub-sets of neighboring nodes used for encoding an occupancy bit bo of a child node in accordance with at least one exemplary embodiment;

**Figure 11** shows an example of a set of parent neighboring nodes in accordance with at least one exemplary embodiment;

**Figure 12** shows an example of a set of farther neighboring nodes in accordance with at least one exemplary embodiment;

**Figure 13** shows an example of a set of much farther neighboring nodes in accordance with at least one exemplary embodiment;

**Figure 14** shows an example of a set of farthest neighboring nodes in accordance with at least one exemplary embodiment;

**Figure 15** shows an example of a second set of neighboring nodes in accordance with at least one exemplary embodiment;

**Figure 16** shows an example of a set of parent neighboring nodes in accordance with at least one exemplary embodiment;

**Figure 17** shows an example of a set of farther neighboring nodes in accordance with at least one exemplary embodiment;

**Figure 18** shows an example of a set of farthest neighboring nodes in accordance with at least one exemplary embodiment; and

**Figure 19** shows a schematic block diagram of an example of a system in which various aspects and exemplary embodiments are implemented.

Similar reference numerals may have been used in different figures to denote similar components.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

At least one of the aspects generally relates to data encoding and decoding, one other aspect generally relates to transmitting a bitstream generated or encoded and one other aspects relates to receiving/accessing a decoded bitstream.

Moreover, the present aspects are not limited to MPEG standards such as MPEG-I part 5 or part 9 that relate to the Point Cloud Compression, and may be applied, for example, to other standards and recommendations, whether pre-existing or future-developed, and extensions of any such standards and recommendations (including MPEG-I part 5 and part 9). Unless indicated otherwise, or technically precluded, the aspects described in the present application may be used individually or in combination.

It has been observed that the precise occupancy of many neighboring nodes around a current node is not needed to be used to profit from most of the neighboring correlations. For dense point cloud, the occupancy of the few (i.e. a dozen or so) closest neighboring nodes is sufficient as an efficient neighborhood occupancy configuration. For sparse point clouds, much more neighboring nodes must be involved, however their occupancy is not needed to be known one by one but only "roughly".

In brief, occupancy information of a current node is represented by a series of occupancy bits among which a first occupancy bit associated with a first child node of the current node is entropy encoded based on a series of bits comprising at least one bit representative of occupancy information of a set of neighboring nodes relative to the first child node.

Said at least one bit of the series of bits represents occupancy information of a set of neighboring nodes relative to the first child node by opposition with prior art in which each bit of such a series of bits represents an occupancy of a single neighboring node.

Also, according to the present invention, depending on the value of the at least one bit, at least one other bit of the series of bits may optionally be used for representing more finely the occupancy information of at least one (or a sub-set of) neighboring node constituting the set of neighboring nodes.

The present invention reduces the memory footprint of neighborhood occupancy configurations because at least one bit of the series of bits may represent the occupancy information of more than a single neighboring node as in prior art.

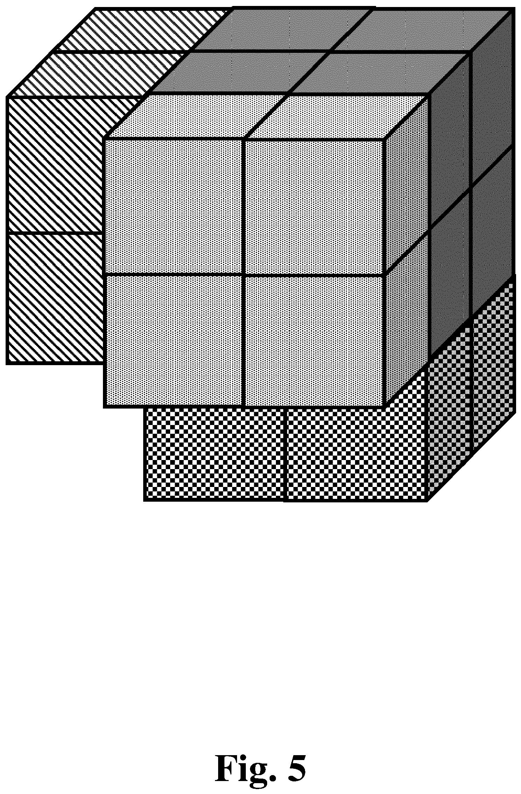

**Figure 5** shows a simple example of illustrating the reduction of a representation of neighborhood occupancy configurations according to at least one embodiment.

This example is given for illustrative purpose and does not limit the exemplary embodiments of the present invention described in the present application.

In the example of **Figure 5,** the 8 child nodes of a current node are depicted in solid grey. A set of 12 neighboring nodes split into three sub-sets of four neighboring nodes is used to encode the occupancy information of the 8 child nodes: the closest left 4 neighboring nodes (hashed), the closest 4 front neighboring nodes (dotted) and the closest 4 neighboring nodes below (checkerboard filled).

A bit $\beta_1$ of a series of K=16 bits ($\beta_1$, ..., $\beta_K$) may indicate if all the three sub-sets (left, front, below) are unoccupied ($\beta_1$=0) or if there is at least one occupied neighboring node ($\beta_1$=1) among the 12 neighboring nodes constituting the set.

When $\beta_1$=0, the current node is likely to be isolated or belongs to a sparse region of the point cloud. The remaining bits $\beta_2$ to $\beta_K$ may then provide occupancy information of farther neighboring nodes, trying to grasp longer distance correlation.

On the other hand, when $\beta_1$=1, the current node is likely to be in a dense region of the point cloud. Therefore, it is likely that strong correlations may be obtained from the detailed occupancy information of the three sub-sets.

For example, three additional bits $\beta_2$, $\beta_3$, $\beta_4$ in the series of K=16 bits ($\beta_1$, ..., $\beta_K$) may be used to indicate more finely an occupancy information of the set of neighboring nodes by indicating the occupancy information of each of the three sub-sets. Namely, bit $\beta_2$ may indicate if the left sub-set is occupied, i.e. at least one of neighboring node of the left sub-set is occupied ($\beta_2$=1); bit $\beta_3$ may indicate if the from sub-set is occupied, i.e. at least one of neighboring node of the front sub-set is occupied ($\beta_3$=1); bit $\beta_4$ may indicate if the below sub-set is occupied. Four bits of the series of K=16 bits may also be representative of the occupancy of the neighboring nodes belonging to an occupied sub-set.

Thus, the series of K=16 bits may take values like the following ones:

- 0xxx...xxxx means that the 12 closest neighboring nodes are unoccupied and the bits xxxx...xxx provide additional occupancy information of 15 (for example) farther neighboring nodes;

- 1100xxxx means that only one sub-set is occupied and four bits xxxx provide the individual occupancy information of the 4 neighboring nodes belonging to said occupied sub-set and 8 bits are still available to provide additional occupancy information, ideally in the direction of non-occupied sub-sets;

- 1110xxxxyyyy (1101xxxxzzzz or 1011yyyyzzzz) means that two sub-sets are occupied and four bits provide the individual occupancy information of the 4 neighboring nodes belonging to the first occupied sub-set follows by four bits providing the individual occupancy information of the 4 neighboring nodes belonging to the second occupied sub-set, and 4 are still available to provide additional occupancy information, ideally in the direction of the non-occupied sub-set;

- 1111xxxxyyyyzzzz means that the 3 sub-sets are occupied; four bits xxxx provide the individual occupancy information of the 4 neighboring nodes belonging to the left sub-set; four bits yyyy provide the individual occupancy information of the 4 neighboring nodes belonging to the front sub-set; and four bits zzzz provide the individual occupancy information of the 4 neighboring nodes belonging to the below sub-set.

In the example of **Figure 5,** at most 16 bits are required to represent a neighborhood occupancy configuration of the densest case and, in other less dense case, unused bits are still available to provide occupancy information of farther neighboring nodes if available. The number K=16 of bits is much less than in the prior art, where each bit indicates the individual occupancy of a neighboring node, when covering both the 12 neighboring nodes of **Figure 5** and the 15 farther neighboring nodes of case 0xxx...xxxx. The prior art would require 16 + 12 = 28 bits. Typically, storing an OBUF configuration requires 2 bytes in memory. The prior art would require $2^{28}*2$ bytes $\approx$ 530MB of memory. this is unpractical. However, the proposed method requires only $2^{16}*2$ bytes $\approx$ 130kB of memory. This is easily stored in cache memory of modern computers.

Availability of the occupancy of parent nodes depends on the location of the current node in the tree representing a point cloud geometry data and on the scanning order of the parent nodes.

A common scanning order of an octree, as used in GPCC, is a breadth first scanning order. Breadth-first means that all nodes of a depth are encoded/decoded before moving on to the next depth. All nodes of a depth have been ordered from the encoding/decoding of the preceding depth. Nodes are encoded/decoded in this order and child nodes are pushed to the next depth by using the Morton order inside each node.

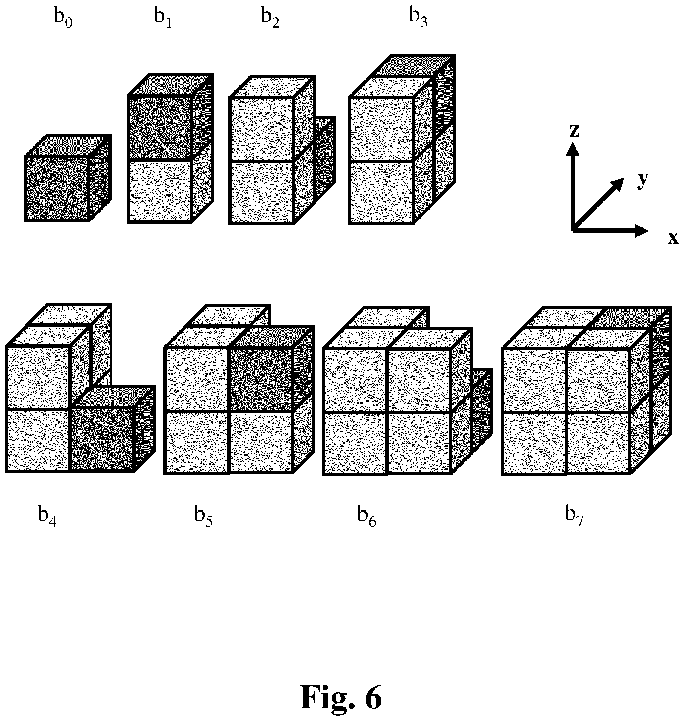

Basically, each current node of the current depth is split into eight child nodes that are scanned following the Morton order shown on **Figure 6** in which the solid grey node (cube) represents the current node and light grey nodes represent the already visited nodes following the Morton order. The associated eight occupancy bits bj (j=0 to 7) are encoded/decoded in this order and only occupied child nodes are pushed to next depth. Practically they are pushed in a FIFO buffer: firstly pushed child nodes will be firstly encoded/decoded when processing next depth.

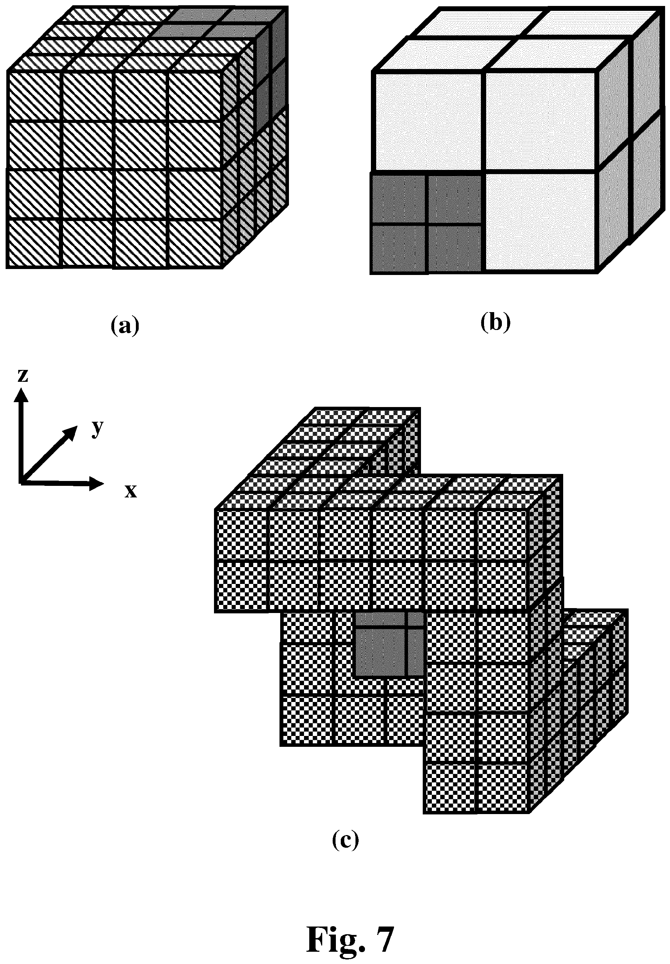

Whatever the scanning order, when considering the encoding/decoding of a current node, not all occupancy of neighboring nodes are available (equivalently have been already encoded/decoded). Therefore, occupancies of some neighboring nodes of child nodes are missing. In the particular cases of a breadth-first Morton scanning order, examples of available neighboring child nodes are shown on **Figure 7.** On **Figure 7(a),** occupancy information of depicted neighboring child nodes (hashed) of a current node (solid dark grey) is always available because the occupancy bits of the child nodes of the 7 neighboring nodes in the lower xyz coordinate corner have always been already encoded/decoded. On **Figure 7(b),** the occupancy information of neighboring child nodes of depicted neighboring nodes (solid light grey) of a current node (solid dark grey) is never available because the occupancy bits of the child nodes of the 7 neighboring nodes in the higher xyz coordinate corner have never been already encoded/decoded. On **Figure 7(c)**, the occupancy information of depicted neighboring child nodes (checkerboard-filled)of a current node (solid dark grey) may or may not be available because the occupancy bits of the child nodes of these remaining 12 neighboring nodes may or may not be already encoded/decoded. The availability of the occupancy information of these 12 neighboring nodes depends on the position of the current node into the octree. In particular, at first order, it depends on the position of the current node in its parent node.

Data representative of the availability of the occupancy information of a neighboring child node or a set of neighboring child nodes may be part of the neighborhood occupancy configuration of a child node.

When using a breadth-first scanning order, one understands that the occupancy information of all neighboring nodes at same depth as the current node is always known because it was encoded/decoded at the preceding depth.

A neighborhood occupancy configuration can be constructed from the occupancy information of the following nodes when encoding/decoding the occupancy information of a child node (solid dark grey on **Figure 7)** of a current node. Nodes carrying the most occupancy information are

- already encoded/decoded sibling nodes (solid light grey) having occupancy bits $b_{j'}$ for j'<j;

- some of the 26 neighboring nodes at same depth as the current node (not represented on the figure);

- always available neighboring child nodes (hashed);

- sometimes available neighboring child nodes (checkboard).

All this occupancy information are be used to construct a neighborhood occupancy configuration that has a reasonable length, say for example lower than 20 bits such that dynamic OBUF can be kept in cache memory.

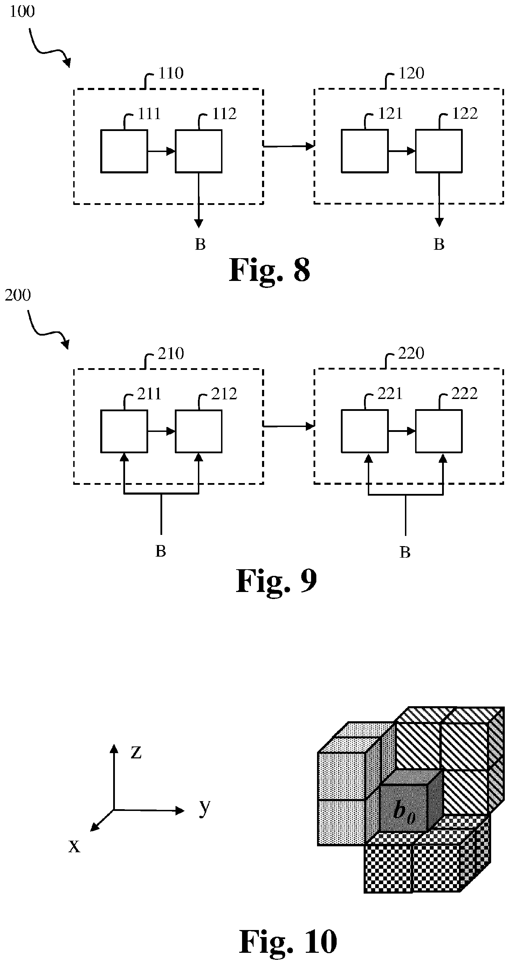

**Figure 8** shows a schematic block diagram of steps of a method 100 of encoding, into a bitstream B, occupancy information of a current node of a tree representing point cloud geometry data in accordance with at least one exemplary embodiment.

Occupancy information associated with the current node comprises an occupancy bit per child node of the current node. For example when the tree is an octree, the current node is associated with 8 child nodes and a series of 8 bits $b_0$, $b_7$, each associated with a child node, represents the occupancy information of the current node.

An occupancy bit of a child node indicates whether the child node is occupied, i.e. when at least one point of the point cloud is comprises in a cube/cuboid associated with the child node, or whether the child node is unoccupied, i.e. when a cube/cuboid associated with the child node does not comprise any point of the point cloud.

In step 110, a first occupancy bit bo, associated with a first child node of the current node, is encoded, into the bitstream B, by determining (step 111) a series of K ($\beta_1$, ..., $\beta_K$) comprising at least one bit representative of occupancy information of a set of neighboring nodes relative to the first child node, and, in step 112, entropy encoding, into the bitstream B, the first occupancy bit bo based on the series of K ($\beta_1$, ..., $\beta_K$).

**Figure 9** shows a schematic block diagram of steps of a method 200 of decoding, from a bitstream B, occupancy information of a current node of a tree representing point cloud geometry data in accordance with at least one exemplary embodiment.

In step 210, a first occupancy bit bo associated with a first child node of the current node is decoded, from the bitstream B, by decoding (step 211), from the bitstream, a series of K bit ($\beta_1$, ..., $\beta_K$) comprising at least one bit representative of occupancy information of a set of neighboring nodes relative to first child node, and by entropy decoding (step 212) the first occupancy bit bo based on the series of at least one bit $\beta_1$, ..., $\beta_K$.

In one exemplary embodiment, the set of neighboring nodes comprises multiple sub-sets of neighboring nodes and the series of K ($\beta_1$, ..., $\beta_K$) may comprise one bit $\beta_1$, named first bit, indicating whether more than one sub-set, named occupied sub-set, comprises at least one occupied neighboring node.

In one exemplary embodiment, when the first bit $\beta_1$ indicates that more than one sub-set is occupied, the series of K ($\beta_1$, ..., $\beta_K$) may further comprise at least one other bit indicating which sub-sets are occupied.

The first bit and the at least one bit indicating which sub-sets are occupied, all indicate sparsity of the set of neighboring nodes.

In variant, when the first bit $\beta_1$ indicates that more than one sub-set is occupied, the series of K ($\beta_1$, ..., $\beta_K$) may further comprise at least one other bit per occupied sub-set to indicate which neighboring node of said occupied sub-set is occupied.

This variant provides a finer knowledge of the occupancy information of the set of neighboring nodes.

**Figure 10** shows an example of a set of neighboring nodes split into three sub-sets of neighboring nodes used for encoding the occupancy bit bo of a child node (solid grey).

In accordance with exemplary embodiment and variants discussed above, a series of 13 bits $\beta_1$, ..., $\beta_{K=13}$ comprises a first bit $\beta_1$ indicating whether more than one sub-set is occupied.

Case $\beta_1$ = 1: Assuming the first bit $\beta_1$ indicates that more than one sub-set is occupied ($\beta_1$ = 1), the series of 13 bits ($\beta_1$, ..., $\beta_{13}$) further comprises a bit $\beta_2$ indicating that each of the three neighboring sub-sets is occupied ($\beta_2$ = 1).

When $\beta_2$ = 0, the series of 13 bits ($\beta_1$, ..., $\beta_{13}$) further comprises three additional bits $\beta_3$, ..., $\beta_5$ to indicate which two of the three sub-sets are occupied: $\beta_3\beta_4\beta_5$ =100 may indicate that the left and below sub-sets are occupied, $\beta_3\beta_4\beta_5$ =101 may indicate that the front and below sub-sets are occupied and $\beta_3\beta_4\beta_5$ =110 may indicate that the left and from sub-sets are occupied. The series of 13 bits ($\beta_1$, ..., $\beta_{13}$) further comprises four additional bits per occupied sub-set representative of the occupancy bits for the four neighboring nodes of the occupied sub-set.

The series of 13 bits $\beta_1$, ..., $\beta_{13}$ representative of neighborhood occupancy configurations used for encoding the first occupancy bit bo may then equal to 10100 $\beta_6\beta_7\beta_8\beta_9$ $\beta_{10}\beta_{11}\beta_{12}\beta_{13}$, or 10101 $\beta_6\beta_7\beta_8\beta_9$ $\beta_{10}\beta_{11}\beta_{12}\beta_{13}$ or 10110 $\beta_6\beta_7\beta_8\beta_9$ $\beta_{10}\beta_{11}\beta_{12}\beta_{13}$.

When $\beta_2$ = 1, the series of 13 bits ($\beta_1$, ..., $\beta_{13}$) further comprises three bits ($\beta_3$, ..., $\beta_5$) equal the occupancy bits for neighboring nodes of the left sub-set. The occupancy bit of the neighboring node of the left sub-set touching the current child node only by a vertex is not considered. The series of 13 bits ($\beta_1$, ..., $\beta_{13}$) further comprises four bits ($\beta_6\beta_7\beta_8\beta_9$) equal the occupancy bits for the four neighboring nodes of the below sub-set and four bits ( $\beta_{10}\beta_{11}\beta_{12}\beta_{13}$) equal the occupancy bits for the four neighboring nodes of the front sub-set.

The length of the series of K bits (K=13) equals then to 13 independently of the occupancy information of the neighboring nodes.

Case $\beta_1$ = 0. In one exemplary embodiment, when the first bit $\beta_1$ indicates that at most one sub-set is occupied ($\beta_1$ =0), the series of K bits ($\beta_1$, ..., $\beta_K$) may further comprise at least one other bit representative of occupancy information of at least one farther neighboring node different (distinct) from the neighboring nodes of the set of neighboring nodes.

When $\beta_1$ =0, the point cloud or at least a part of the point cloud comprising the current child node is less dense and farther neighboring nodes are looked at to grasp longer distance correlations improving thus entropy encoding/decoding of the first occupancy bit bo.

In variant, the series of K ($\beta_1$, ..., $\beta_K$) may comprise two additional bits to indicate which of the at most one sub-set is occupied.

In variant, the series of at least one bit ($\beta_1$, ..., $\beta_K$) may comprise at least one forth bit to indicate which of the neighboring nodes of each occupied sub-set is occupied.

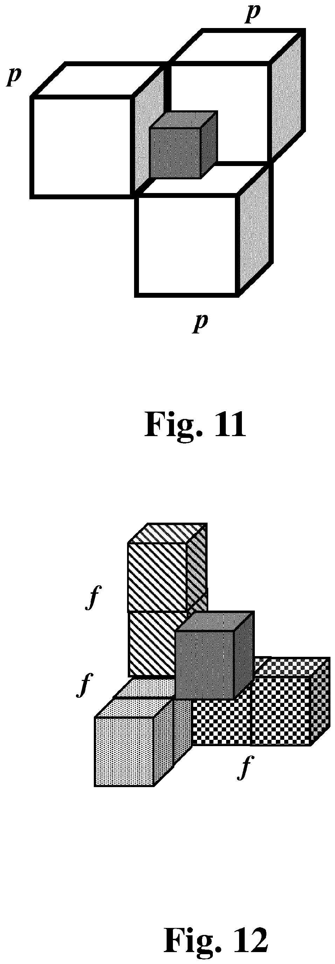

According to an example illustrated on **Figures 11-14,** a series of 13 bits ($\beta_1$, ..., $\beta_{K=13}$) comprises a first bit $\beta_1$ indicating whether more than one sub-set is occupied. Assuming the first bit indicates that at most one sub-set is occupied ($\beta_1$ = 0), the series of 13 bits ($\beta_1$, ..., $\beta_{K=13}$) further comprises two second bits indicating which of the neighboring nodes of each occupied sub-set is occupied. For example, the two second bits $\beta_2\beta_3$ may indicate that the three sub-sets are unoccupied ($\beta_2\beta_3$ = 00). The two bits $\beta_2\beta_3$ may indicate that only the left sub-set is occupied ($\beta_2\beta_3$ = 01). The two bits $\beta_2\beta_3$ may indicate that only the front sub-set is occupied ($\beta_2\beta_3$ = 10). The two bits $\beta_2\beta_3$ may indicate that only the below sub-set is occupied ( $\beta_2\beta_3$ = 11). Next, the series of 13 bits ($\beta_1$, ..., $\beta_{K=13}$) further comprises seven additional bits $\beta_4$, ..., $\beta_{10}$ that indicate which of the neighboring nodes of each occupied sub-set is occupied.

In variant, the set of additional bits $\beta_4$, ..., $\beta_{10}$ may be determined as follows.

Three bits $\beta_4$ $\beta_5$ $\beta_6$ are representative of occupancy information "p" of the three parent neighboring nodes to the current node (solid grey) to the left, front and below as shown on **Figure 11.**

Subcase $\beta_4$ $\beta_5$ $\beta_6$ = 000. When all these three parent neighboring nodes are unoccupied ($\beta_4$ $\beta_5$ $\beta_6$ = 000), three sets of two farther neighboring nodes are considered as shown on **Figure 12.** Three bits $\beta_7$ $\beta_8$ $\beta_9$ are then considered, each of the three bits is representative of occupancy information "f" of a sub-set of two neighboring nodes. The remaining bit $\beta_{10}$ is not used.

The set of additional bits $\beta_4$ $\beta_5$ $\beta_6$ $\beta_7$ $\beta_8$ $\beta_9$ $\beta_{10}$ may then be equal to "000 fff #".

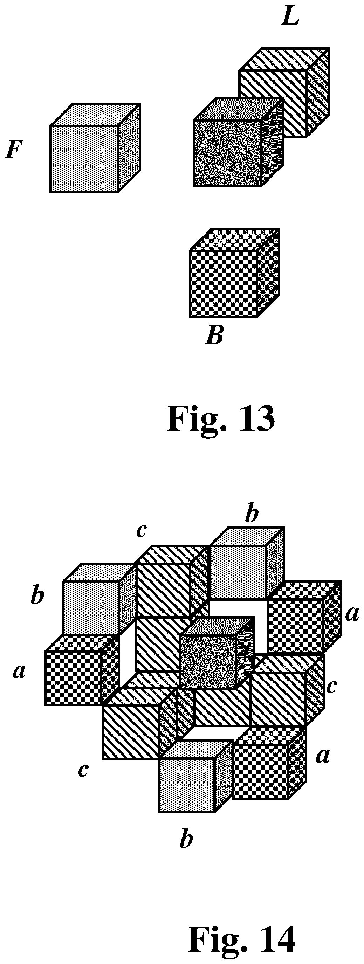

Subcase $\beta_4$ $\beta_5$ $\beta_6$ ≠ 000. When at least one of the three parent neighboring nodes is occupied ( $\beta_4$ $\beta_5$ $\beta_6$ ≠ 000 = *ppp*), occupancy information "L", "F", "B" of three much farther neighboring nodes are considered as shown on **Figure 13.** A bit $\beta_7$ indicates whether at least one of the three much farther neighboring nodes is occupied. When at least one of the three much farther neighboring nodes is occupied ( $\beta_7$ = 1), then the three remaining bits $\beta_8$ $\beta_9$ $\beta_{10}$ are representative of occupancy information "L","F","B" of the three much farther neighboring nodes.

The set of additional bits $\beta_4$ $\beta_5$ $\beta_6$ $\beta_7$ $\beta_8$ $\beta_9$ $\beta_{10}$ may then equal to "ppp 1 LFB".

When the lower bit $\beta_7$ indicates all the three much farther neighboring nodes are unoccupied ( $\beta_7$ =0), three sets "a", "b" and "c" of farthest neighboring nodes are considered as shown on **Figure 14** and the three remaining bits $\beta_8$ $\beta_9$ $\beta_{10}$ are representative of occupancy information of the neighboring nodes of the sub-sets "a", "b" and "c", each remaining bit indicating if a sub-set is occupied or not.

The set of additional bits $\beta_4$ $\beta_5$ $\beta_6$ $\beta_7$ $\beta_8$ $\beta_9$ $\beta_{10}$ may then equal to "ppp 0 abc".

The examples shown on **Figures 11** to **14** are given to illustrate a way to determine additional bits but any other way for defining such bits may also be used.

In summary, the series of K bits ($\beta_1$, ..., $\beta_K$) may have different lengths. When the series comprises a first bit $\beta_1$ = 1, the length equals 13 bits and when $\beta_1$ = 0, the length equals 10. Practically, two dynamic OBUF trees of 12 bits ($\beta_2$, ..., $\beta_{13}$) and 9 bits ($\beta_2$, ..., $\beta_{10}$) are used, and the leading bit $\beta_1$ selects which OBUF tree to use.

In one exemplary embodiment of methods 100 and 200, an occupancy bit ($b_1$,...,$b_7$) associated with another child node, named a current child node, of the current node is encoded (step 120) (decoded, step 220) into (from) the bitstream B by determining (steps 121, 221) a second series of L bits ($\gamma_1$, ..., $\gamma_L$) comprising the first occupancy bit ($\gamma_1$ =$b_0$) and one other bit $\gamma_2$, named first bit, representative of occupancy information of a second set of neighboring nodes of the current child node, and, in step 121 (222), entropy encoding, into (from) the bitstream B, said other occupancy bit ($b_1$,...,$b_7$) based on the second series of L bit ($\gamma_1$, ..., $\gamma_L$).

In one exemplary embodiment, the second set of neighboring nodes comprises multiple sub-sets of neighboring nodes of the current child node, and the first bit $\gamma_2$ indicates whether at least one of the sub-sets, named occupied sub-set, comprises at least one occupied neighboring node.

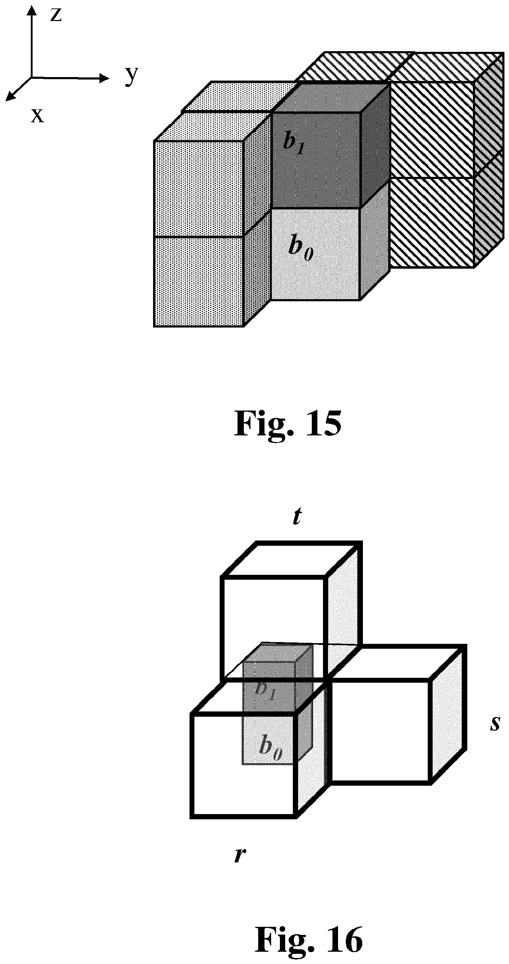

**Figure 15** shows an example of a second set of neighboring nodes split into two sub-sets (left and bottom) of four neighboring nodes used for encoding/decoding an occupancy bit $b_1$ of a current child node (solid grey).

Case $\gamma_2$ = 1. In variant, when the first bit $\gamma_2$ indicates that at least one of the sub-sets is occupied ($\gamma_2$=1), the second series of L bits ($\gamma_1$, ..., $\gamma_L$) further comprises at least one bit ($\gamma_3$, ..., $\gamma_L$) per occupied sub-set to indicate which neighboring node of said occupied sub-set is occupied, and at least one other bit representative of occupancy of at least one neighboring parent node of the current child node.

**Figure 16** shows an example of three parent nodes of the current child node associated with the occupancy bit $b_1$ to be entropy encoded/decoded. The occupancy information of each of those parent node is denoted 't', 'r' and 's'.

According to this example, the second series of 13 bits equals to $b_0$ 1 $\gamma_3\gamma_4\gamma_5$ $\gamma_6$ $\gamma_7\gamma_8\gamma_9\gamma_{10}$ $\gamma_{11}\gamma_{12}\gamma_{13}$ where the bits $\gamma_3\gamma_4\gamma_5$ $\gamma_6$ are representative of the occupancy information of the neighboring nodes of the left sub-set of the second set of neighboring nodes **(Figure 15)**, the bits $\gamma_7\gamma_8\gamma_9\gamma_{10}$ indicate the occupancy information of the neighboring nodes of the bottom sub-set of the second set of neighboring nodes, and the bits $\gamma_{11}\gamma_{12}\gamma_{13}$ are representative of the occupancy information 'r', 's, and 't'.

Case $\gamma_2$ = 0. In variant, when the first bit $\gamma_2$ indicates that all the sub-sets are unoccupied ($\gamma_2$=0), the second series of at least one bit ($\gamma_1$, ..., $\gamma_L$) may further comprise at least one other bit ($\gamma_3$, ..., $\gamma_L$) representative of occupancy information of at least one farther neighboring of the current child node.

When $\gamma_2$ =0, the point cloud or at least a part of the point cloud comprising the current child node is less dense, farther neighboring nodes are considered to grasp longer distance correlations improving thus entropy encoding/decoding.

In variant, the second series of L bits ($\gamma_1$, ..., $\gamma_L$) may comprise one bit $\gamma_4$ indicating whether all the at least one farther neighboring nodes are unoccupied.

Subcase $\gamma_4$ = 1. In variant, when said bit $\gamma_4$ indicates that all the at least one farther neighboring nodes are not unoccupied $\overline{(\gamma_4 = 1)}$, the second series of L bits ($\gamma_1$, ..., $\gamma_L$) further comprises at least one bit representative of occupancy of said farther neighboring nodes.

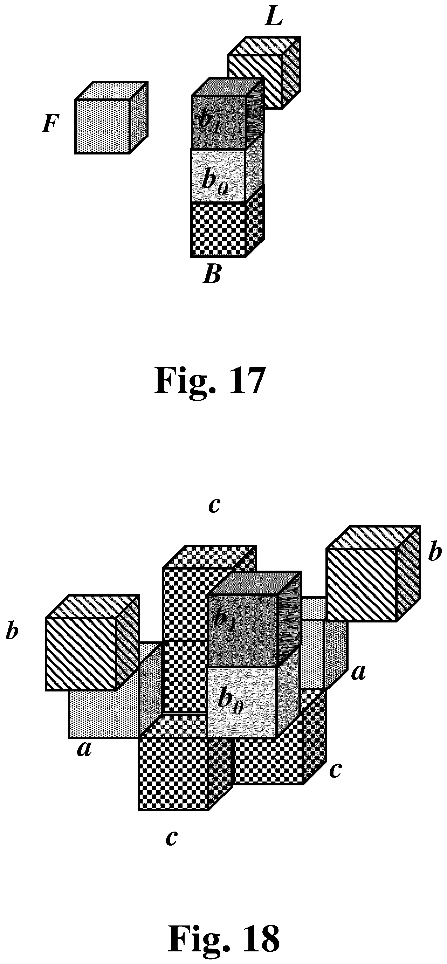

According to an example illustrated on **Figure 17,** a second series of 7 bits ($\gamma_1$, ..., $\gamma_{L=7}$) comprises five bits $\gamma_3$, ..., $\gamma_7$. The bit $\gamma_3$ is representative of occupancy information 't' of the parent node above the current child node. The bit $\gamma_4$ indicates that all the at least one farther neighboring nodes are not unoccupied ($\gamma_4$ = 1) and three bits $\gamma_5$, ..., $\gamma_7$ are representative of occupancy information ',L', 'F', 'B' of three farther neighboring nodes **(Figure 17)**.

The second series of at least one bit may then equal to "$b_0$ 0 $t$ 1 $LSB$".

Subcase $\gamma_4$ = 0. In variant, when said bit $\gamma_4$ indicates that all the at least one farther neighboring nodes are unoccupied $\overline{(\gamma_4 = 0)}$, the second series of L bits ($\gamma_1$, ..., $\gamma_L$) further comprises additional bits representative of occupancy of at least one much farther neighboring node.

According to an example illustrated on **Figure 18,** a second series of 7 bits ($\gamma_1$, ..., $\gamma_{L=7}$) comprises five additional bits $\gamma_3$, ..., $\gamma_7$. The bit $\gamma_3$ is representative of occupancy information 't' of the parent node above the current child node. The bit $\gamma_4$ indicates that all the at least one farther neighboring nodes are unoccupied ($\gamma_4$ = 0), and three bits $\gamma_5$, ..., $\gamma_7$ are representative of occupancy information of three sub-sets of much farther neighboring nodes. A first sub-set of two much neighboring nodes 'a', a second sub-set of two much neighboring nodes 'b' and a third sub-set of four much farther neighboring node 'c'.

The second series of at least one bit may then equal to "$b_0$ $\gamma_2$ $t$ $abc$" where $abc$ indicate the occupancy information of the set of neighboring nodes 'a', 'b' and 'c'.

The second series of L bits ($\gamma_1$, ..., $\gamma_L$) may have different lengths. When the series comprises a first $\gamma_2$=1, the length equals 13 bits and when $\gamma_2$=0, the length equals 7.

As above discussed, both the series of K bits ($\beta_1$, ..., $\beta_K$) representative of a neighborhood occupancy configuration used for encoding a first occupancy bit bo of a child node of a current node and the second series of L bits ($\gamma_1$, ..., $\gamma_L$) representative of a neighborhood occupancy configuration used for encoding one other occupancy bit $b_1$,...,$b_7$ of other child node of the current node, may have different lengths according to values of bits of those series that provide an indication of the sparsity of the point cloud around the considered child nodes.

In one exemplary embodiment of methods 100 and 200, the series of K bits ($\beta_1$, ... , $\beta_K$) and the second series of L bits ($\gamma_1$, ..., $\gamma_L$) are split into a primary part and a secondary part.

The primary part of the series of K bits ($\beta_1$, ..., $\beta_K$) is a first representation of the occupancy information of the set of neighboring nodes and the secondary part is a finer representation of said occupancy information.

In accordance with the previous examples, the primary part of the series of K bits ($\beta_1$, ..., $\beta_K$) may equal to 11 and the secondary part may equal to $\beta_3\beta_4\beta_5$ $\beta_6\beta_7\beta_8\beta_9$ $\beta_{10}\beta_{11}\beta_{12}\beta_{13}$, or the primary part of the series of K bits ($\beta_1$, ..., $\beta_K$) may equal to 10$\beta_3\beta_4\beta_5$ and the secondary part may equal to $\beta_6\beta_7\beta_8\beta_9$ $\beta_{10}\beta_{11}\beta_{12}\beta_{13}$, or the primary part may equal to 0 $\beta_2\beta_3$ and the secondary part ay equal to $\beta_4\beta_5\beta_6$ $\beta_7\beta_8\beta_9\beta_{10}$.

In accordance with the previous examples, the primary part of the series of L bits ($\gamma_1$, ..., $\gamma_L$) may equal to $b_0$ 1 and the secondary part may equal to $\gamma_3\gamma_4\gamma_5$ $\gamma_6$ $\gamma_7\gamma_8\gamma_9\gamma_{10}$ $\gamma_{11}\gamma_{12}\gamma_{13}$ $rst$ or the primary part of the series of L bits ($\gamma_1$, ..., $\gamma_L$) may equal to $b_0$ 0 and the secondary part may equal to $b_0$ 0 and the secondary part may equal to $t$ 1 $LSB$ or $t$ 0 $\gamma_4$ $\gamma_5$ $\gamma_7$".

The primary part remain unchanged (is never reduced), and the dynamic of secondary part may be reduced by applying a dynamic reduction function DR as described in the European patent application n° EP21306741.6.

The length of the never-reduced primary part of those series is fixed, however the length of the reduced secondary may vary. Two dynamic OBUF trees may be used to reduce the secondary part of those series depending on their lengths.

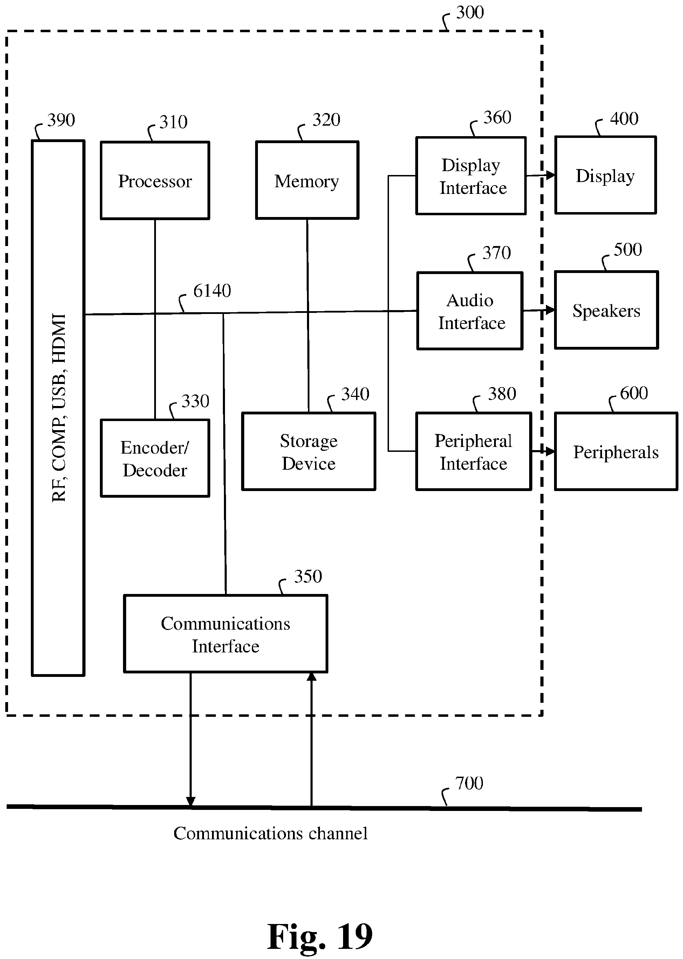

**Figure 19** shows a schematic block diagram illustrating an example of a system in which various aspects and exemplary embodiments are implemented.

System 300 may be embedded as one or more devices including the various components described below. In various embodiments, the system 300 may be configured to implement one or more of the aspects described in the present application.

Examples of equipment that may form all or part of the system 300 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. Elements of system 300, singly or in combination, may be embodied in a single integrated circuit (IC), multiple ICs, and/or discrete components. For example, in at least one embodiment, the processing and encoder/decoder elements of system 300 may be distributed across multiple ICs and/or discrete components. In various embodiments, the system 300 may be communicatively coupled to other similar systems, or to other electronic devices, via, for example, a communications bus or through dedicated input and/or output ports.

The system 300 may include at least one processor 310 configured to execute instructions loaded therein for implementing, for example, the various aspects described in the present application. Processor 310 may include embedded memory, input output interface, and various other circuitries as known in the art. The system 300 may include at least one memory 320 (for example a volatile memory device and/or a non-volatile memory device). System 300 may include a storage device 340, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 340 may include an internal storage device, an attached storage device, and/or a network accessible storage device, as non-limiting examples. The system 300 may include an encoder/decoder module 330 configured, for example, to process data to provide encoded/decoded point cloud geometry data, and the encoder/decoder module 330 may include its own processor and memory. The encoder/decoder module 330 may represent module(s) that may be included in a device to perform the encoding and/or decoding functions. As is known, a device may include one or both encoding and decoding modules. Additionally, encoder/decoder module 330 may be implemented as a separate element of system 300 or may be incorporated within processor 310 as a combination of hardware and software as known to those skilled in the art.

Program code to be loaded onto processor 310 or encoder/decoder 330 to perform the various aspects described in the present application may be stored in storage device 340 and subsequently loaded onto memory 320 for execution by processor 310. In accordance with various embodiments, one or more of processor 310, memory 320, storage device 340, and encoder/decoder module 330 may store one or more of various items during the performance of the processes described in the present application. Such stored items may include, but are not limited to, a point cloud frame, encoded/decoded geometry/attributes videos/images or portions of the encoded/decoded geometry/attribute video/images, a bitstream, matrices, variables, and intermediate or final results from the processing of equations, formulas, operations, and operational logic.

In several embodiments, memory inside of the processor 310 and/or the encoder/decoder module 330 may be used to store instructions and to provide working memory for processing that may be performed during encoding or decoding.

In other embodiments, however, a memory external to the processing device (for example, the processing device may be either the processor 310 or the encoder/decoder module 330) may be used for one or more of these functions. The external memory may be the memory 320 and/or the storage device 340, for example, a dynamic volatile memory and/or a non-volatile flash memory. In several embodiments, an external non-volatile flash memory may be used to store the operating system of a television. In at least one embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), HEVC (High Efficiency Video coding), VVC (Versatile Video Coding), or MPEG-I part 5 (V-PCC) or part 9 (G-PCC).

The input to the elements of system 300 may be provided through various input devices as indicated in block 390. Such input devices include, but are not limited to, (i) an RF portion that may receive an RF signal transmitted, for example, over the air by a broadcaster, (ii) a Composite input terminal, (iii) a USB input terminal, and/or (iv) an HDMI input terminal.

In various embodiments, the input devices of block 390 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 300 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream may be provided to various processing elements, including, for example, processor 310, and encoder/decoder 330 operating in combination with the memory and storage elements to process the data stream as necessary for presentation on an output device.

Various elements of system 300 may be provided within an integrated housing. Within the integrated housing, the various elements may be interconnected and transmit data therebetween using suitable connection arrangement 390, for example, an internal bus as known in the art, including the I2C bus, wiring, and printed circuit boards.

The system 300 may include communication interface 350 that enables communication with other devices via communication channel 700. The communication interface 350 may include, but is not limited to, a transceiver configured to transmit and to receive data over communication channel 700. The communication interface 350 may include, but is not limited to, a modem or network card and the communication channel 700 may be implemented, for example, within a wired and/or a wireless medium.

Data may be streamed to the system 300, in various embodiments, using a Wi-Fi network such as IEEE 802.11. The Wi-Fi signal of these embodiments may be received over the communications channel 700 and the communications interface 350 which are adapted for Wi-Fi communications. The communications channel 700 of these embodiments may be typically connected to an access point or router that provides access to outside networks including the Internet for allowing streaming applications and other over-the-top communications.

Other embodiments may provide streamed data to the system 300 using a set-top box that delivers the data over the HDMI connection of the input block 390.

Still other embodiments may provide streamed data to the system 300 using the RF connection of the input block 390.

The streamed data may be used as a way for signaling information used by the system 300. The signaling information may comprise the bitstream B and/or information such a number of points of a point cloud, coordinates and/or sensor setup parameters.

It is to be appreciated that signaling may be accomplished in a variety of ways. For example, one or more syntax elements, flags, and so forth may be used to signal information to a corresponding decoder in various embodiments.

The system 300 may provide an output signal to various output devices, including a display 400, speakers 500, and other peripheral devices 600. The other peripheral devices 600 may include, in various examples of embodiments, one or more of a stand-alone DVR, a disk player, a stereo system, a lighting system, and other devices that provide a function based on the output of the system 300.

In various embodiments, control signals may be communicated between the system 300 and the display 400, speakers 500, or other peripheral devices 600 using signaling such as AV.Link (Audio/Video Link), CEC (Consumer Electronics Control), or other communications protocols that enable device-to-device control with or without user intervention.

The output devices may be communicatively coupled to system 300 via dedicated connections through respective interfaces 360, 370, and 380.

Alternatively, the output devices may be connected to system 300 using the communications channel 700 via the communications interface 350. The display 400 and speakers 500 may be integrated in a single unit with the other components of system 300 in an electronic device such as, for example, a television.

In various embodiments, the display interface 360 may include a display driver, such as, for example, a timing controller (T Con) chip.

The display 400 and speaker 500 may alternatively be separate from one or more of the other components, for example, if the RF portion of input 390 is part of a separate set-top box. In various embodiments in which the display 400 and speakers 500 may be external components, the output signal may be provided via dedicated output connections, including, for example, HDMI ports, USB ports, or COMP outputs.

In **Fig. 1-19,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. As should be clear, the equipment may be mobile and even installed in a mobile vehicle.

Computer software may be implemented by the processor 310 or by hardware, or by a combination of hardware and software. As a non-limiting example, the embodiments may be also implemented by one or more integrated circuits. The memory 320 may be of any type appropriate to the technical environment and may be implemented using any appropriate data storage technology, such as optical memory devices, magnetic memory devices, semiconductor-based memory devices, fixed memory, and removable memory, as non-limiting examples. The processor 310 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the specification are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received point cloud frame (including possibly a received bitstream which encodes one or more point cloud frames) in order to produce a final output suitable for display or for further processing in the reconstructed point cloud domain. In various embodiments, such processes include one or more of the processes typically performed by a decoder. In various embodiments, such processes also, or alternatively, include processes performed by a decoder of various implementations described in this application, for example,

As further examples, in one embodiment "decoding" may refer only to de-quantizing, in one embodiment "decoding" may refer to entropy decoding, in another embodiment "decoding" may refer only to differential decoding, and in another embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input point cloud frame in order to produce an encoded bitstream. In various embodiments, such processes include one or more of the processes typically performed by an encoder. In various embodiments, such processes also, or alternatively, include processes performed by an encoder of various implementations described in this application.

As further examples, in one embodiment "encoding" may refer only to quantizing, in one embodiment "encoding" may refer only to entropy encoding, in another embodiment "encoding" may refer only to differential encoding, and in another embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, this application may refer to "obtaining" various pieces of information. Obtaining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain embodiments the encoder signals a particular information such a number of points of the point cloud or coordinates or sensor setup parameters. In this way, in an embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding, into a bitstream, occupancy information of a current node of a tree representing point cloud geometry data, said occupancy information associated with the current node comprising an occupancy bit ($b_0$, $b_7$) per child node of the current node to indicate whether the child node is occupied when at least one point of the point cloud is associated with it or unoccupied otherwise, wherein encoding (110) a first occupancy bit ($b_0$), associated with a first child node of the current node comprises:

   - determining (111) a series of at least one bit ($\beta_1$, ..., $\beta_K$) comprising at least one bit representative of occupancy information of a set of neighboring nodes relative to the first child node; and
   - entropy encoding (112), into the bitstream, the first occupancy bit ($b_0$) based on the series of at least one bit ($\beta_1$, ..., $\beta_K$).

2. A method of decoding, from a bitstream, occupancy information of a current node of a tree representing point cloud geometry data, said occupancy information associated with the current node comprising an occupancy bit ($b_0$, $b_7$) per child node of the current node to indicate whether the child node is occupied when at least one point of the point cloud is associated with it or unoccupied otherwise, wherein decoding (210) a first occupancy bit ($b_0$), associated with a first child node of the current node comprises:

   - decoding (211), from the bitstream, a series of at least one bit ($\beta_1$, ..., $\beta_K$) comprising at least one bit representative of occupancy information of a set of neighboring nodes relative to the first child node; and
   - entropy decoding (212) the first occupancy bit ($b_0$) based on the series of at least one bit ($\beta_1$, ..., $\beta_K$).

3. The method of one of claims 1 or 2, wherein the set of neighboring nodes comprises multiple sub-sets of neighboring nodes and wherein the series of at least one bit ($\beta_1$, ..., $\beta_K$) comprises one bit ($\beta_1$), named first bit, indicating whether more than one sub-set, named occupied sub-set, comprises at least one occupied neighboring node.

4. The method of claim 3, wherein when the first bit ($\beta_1$) indicates that more than one sub-set is occupied, the series of at least one bit ($\beta_1$, ..., $\beta_K$) further comprises at least one other bit indicating which sub-sets are occupied.

5. The method of claim 3 or 4, wherein the series of at least one bit ($\beta_1$, ..., $\beta_{13}$) further comprises at least one bit per occupied sub-set to indicate which neighboring node of said occupied sub-set is occupied.

6. The method of one of claim 3, wherein when the first bit ($\beta_1$) indicates that at most one sub-set is occupied, the series of at least one bit ($\beta_1$, ..., $\beta_K$) further comprises at least one bit representative of occupancy information of at least one farther neighboring node different from the neighboring nodes of the set of neighboring nodes.

7. The method of one of claims 1, 3 to 6, wherein encoding, into the bitstream, occupancy bit ($b_1$,...,$b_7$) associated with each other child node, named a current child node, of the current node comprises:

   - determining a second series of at least one bit ($\gamma_1$, ..., $\gamma_K$) comprising the first occupancy bit (bo) and one other bit ($\gamma_2$), named first bit, representative of occupancy information of a second set of neighboring nodes of the current child node; and
   - entropy encoding, into the bitstream, said other occupancy bit ($b_1$,...,$b_7$) based on the second series of at least one bit ($\gamma_1$, ..., $\gamma_K$).

8. The method of one of claims 2 to 6, wherein decoding, from the bitstream, occupancy bit ($b_1$,...,$b_7$) associated with each other child node, named a current child node, of the current node comprises:

   - decoding, from the bitstream, a second series of at least one bit ($\gamma_1$, ..., $\gamma_K$) comprising to the first occupancy bit (bo) and one other bit ($\gamma_2$), named first bit, representative of occupancy information of a second set of neighboring nodes of the current child node; and
   - entropy encoding said other occupancy bit ($b_1$,...,$b_7$) based on the second series of at least one bit ($\gamma_1$, ..., $\gamma_K$).

9. The method of claim 7 or 8, wherein the second set of neighbouring nodes comprises multiple sub-sets of neighbouring nodes of the current child node, and wherein the first bit ($\gamma_2$) indicates whether at least one of the sub-sets, named occupied sub-set, comprises at least one occupied neighboring node.

10. The method of claim 9, wherein when the first bit ($\gamma_2$) indicates that each sub-set is occupied, the second series of at least one bit ($\gamma_1$, ..., $\gamma_K$) further comprises at least one third bit per occupied sub-set to indicate which neighboring node of said sub-set is occupied and at least one other bit representative of occupancy of at least one neighboring parent node of the current child node.

11. The method of 9, wherein when the first bit ($\gamma_2$) indicates that all the sub-sets are unoccupied, the second series of at least one bit ($\gamma_1$, ..., $\gamma_K$) may further comprise at least one other bit representative of occupancy of at least one farther neighboring of the current child node.

12. An apparatus comprising one or more processors configured to performing one of the methods claimed in any one of claims 1, 3 to 7, 9 to 11.

13. An apparatus comprising one or more processors configured to performing one of the methods claimed in any one of claims 2 to 6, 8 to 11.

14. A computer program product including instructions which, when the program is executed by one or more processors, causes the one or more processors to carry out one of the methods claimed in any one of claims 1 to 11.

15. A non-transitory storage medium carrying instructions of program code for executing one of the methods claimed in any one of claims 1 to 11.

**Fig. 1**

**Fig. 2**

**Fig. 3**

**Fig. 4**

**Fig. 5**

Fig. 6

(a)

(b)

(c)

z

y

x

Fig. 7

100

110

111 112

B

Fig. 8

120

121 122

B

200

210

211 212

B

Fig. 9

220

221 222

B

z

y

x

$b_0$

Fig. 10

**Fig. 11**

**Fig. 12**

**Fig. 13**

**Fig. 14**

**Fig. 15**

**Fig. 16**

**Fig. 17**

**Fig. 18**

**Fig. 19**

Europäisches
Patentamt

European
Patent Office

Office européen
des brevets

# EUROPEAN SEARCH REPORT

Application Number

EP 22 30 5272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "G-PCC codec description", 128. MPEG MEETING; 20191007 - 20191011; GENEVA; (MOTION PICTURE EXPERT GROUP OR ISO/IEC JTC1/SC29/WG11), , no. n18891 18 December 2019 (2019-12-18), XP030225589, Retrieved from the Internet: URL:http://phenix.int-evry.fr/mpeg/doc_end _user/documents/128_Geneva/wg11/w18891.zip w18891.docx [retrieved on 2019-12-18] * page 15 - page 20 * * page 32 - page 35 * ----- | 1-15 | INV. G06T9/00 G06T9/40 H04N19/13 H04N19/91 H04N19/96 |
| X | US 2021/192797 A1 (LASSERRE SÉBASTIEN [FR] ET AL) 24 June 2021 (2021-06-24) * paragraph [0033] * * paragraph [0084] - paragraph [0170] * ----- | 1-15 | |
| X | WO 2021/196392 A1 (PENG CHENG LAB [CN]; UNIV PEKING SHENZHEN GRADUATE SCHOOL [CN]) 7 October 2021 (2021-10-07) * abstract * ----- | 1,2, 12-15 | TECHNICAL FIELDS SEARCHED (IPC) G06T H04N |

The present search report has been drawn up for all claims

| Place of search | Date of completion of the search | Examiner |
|---|---|---|
| Munich | 30 August 2022 | Vaquero, Raquel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 30 5272

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2022

| Patent document cited in search report | | Publication date | Patent family member(s) | | Publication date |
|---|---|---|---|---|---|
| US 2021192797 | A1 | 24-06-2021 | CN | 112272922 A | 26-01-2021 |
| | | | EP | 3553745 A1 | 16-10-2019 |
| | | | EP | 3937132 A1 | 12-01-2022 |
| | | | JP | 2021521679 A | 26-08-2021 |
| | | | KR | 20200141065 A | 17-12-2020 |
| | | | US | 2021192797 A1 | 24-06-2021 |
| | | | WO | 2019195920 A1 | 17-10-2019 |
| WO 2021196392 | A1 | 07-10-2021 | CN | 113473127 A | 01-10-2021 |
| | | | WO | 2021196392 A1 | 07-10-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21306741

**Non-patent literature cited in the description**

- **S. LASSERRE et al.** Using neighboring nodes for the compression of octrees representing the geometry of point clouds. *ACM MMSys,* 19 June 2019